Europäisches Patentamt

European Patent Office

Office européen des brevets

(11) Veröffentlichungsnummer: **0 315 781 B1**

# EUROPÄISCHE PATENTSCHRIFT

(45) Veröffentlichungstag der Patentschrift: **17.06.92**

(51) Int. Cl.⁵: **G01M 17/00**

(21) Anmeldenummer: **88116716.7**

(22) Anmeldetag: **08.10.88**

(54) **Kraftfahrzeug-Prüfstand.**

(30) Priorität: **10.11.87 DE 3738133**

(43) Veröffentlichungstag der Anmeldung:
**17.05.89 Patentblatt 89/20**

(45) Bekanntmachung des Hinweises auf die
Patenterteilung:
**17.06.92 Patentblatt 92/25**

(84) Benannte Vertragsstaaten:
**CH DE FR GB IT LI NL**

(56) Entgegenhaltungen:
**DE-A- 2 654 586**
**DE-B- 1 573 848**
**DE-B- 2 540 514**

(73) Patentinhaber: **ROBERT BOSCH GMBH**
**Postfach 30 02 20**
**W-7000 Stuttgart 30(DE)**

(72) Erfinder: **Adolph, Dietrich, Dr.**
**Im Wetterkreuz 12**
**W-7321 Albershausen(DE)**
Erfinder: **Höckel, Herbert, Dipl.-Ing.**
**Hannes-Tobel-Strasse 2/1**
**W-7313 Reichenbach/Fils(DE)**

## Beschreibung

Die Erfindung geht aus von einem Kraftfahrzeug-Prüfstand nach der Gattung des Anspruchs 1. Unter der Bezeichnung "LPS 95" ist ein Leistungsprüfstand der Robert Bosch GmbH zum Prüfen von Fahrzeugen mit Radleistungen bis 150 kW und Geschwindigkeiten bis zu 200 km/h sowie zum Ermitteln des Kraftstoffverbrauchs bekannt. Zunehmend an Bedeutung gewinnt die Abgasmessung, die mit dem bekannten Prüfstand bei vorgebbaren Motorleistungen durchführbar ist. Bei der Messung treiben die Antriebsräder des Kraftfahrzeugs Führungs- und Lastrollen an. Die Lastrollen sind mit einer Wirbelstrombremse gekoppelt, die nach Erregung der Bremse dem antreibenden Kraftfahrzeug-Räderpaar eine dosierbare Kraft entgegensetzt. Die Leistung des Antriebsmotors ist errechenbar aus der Rollendrehzahl sowie der bekannten Erregung der Wirbelstrombremse.

Zur Erregung der Wirbelstrombremse ist bislang eine externe Energiezufuhr mit einer Leistung von bis zu 3 kW erforderlich. Bei dem bekannten Leistungsprüfstand ist für die Bereitstellung der Erregungsenergie ein Thyristorsatz vorgesehen, der durch gleichgerichtete Netzspannung versorgt wird.

Vorteile der Erfindung

Der erfindungsgemäße Kraftfahrzeug-Prüfstand weist demgegenüber den Vorteil auf, daß die zur Erregung der Wirbelstrombremse erforderliche Energie vom zu prüfenden Kraftfahrzeug selbst erzeugt wird. Erfindungsgemäß ist wenigstens eine Lichtmaschine als Stromerzeuger vorgesehen, die von wenigstens einer Rolle des Leistungsprüfstands angetrieben wird.

Ein Vorteil liegt im Wegfall des bislang erforderlichen teueren Thyristorsatzes. Lichtmaschinen sind als Massenprodukt preisgünstig herstellbar und gegenüber einer elektronischen Schaltung mit Halbleiter-Leistungsbauelementen wartungsärmer.

Ein weiterer Vorteil ist die erhebliche Reduzierung der Leistungsanforderung an den Netzanschluß. Die erforderliche Erregerleistung für die Lichtmaschine sowie der Leistungsbedarf der elektronischen Auswerteschaltung ist auf wenige Watt beschränkt.

Die Ansteuerung der Wirbelstrombremse ist erheblich vereinfacht, da lediglich der Erregerstrom der Lichtmaschine gesteuert werden muß.

Durch die in den abhängigen Ansprüchen aufgeführten Maßnahmen sind vorteilhafte Weiterbildungen und Verbesserungen des im Anspruch 1 angegebenen Kraftfahrzeug-Prüfstands, insbesondere eines Leistungsoder Funktionsprüfstands möglich.

Die geringe, zur Erregung der Lichtmaschine benötigte Steuerleistung ermöglicht einen Betrieb des Leistungsprüfstands ohne Netzanschluß durch den Einsatz einer Batterie mit kleiner Speicherkapazität, die von der Lichtmaschine nachgeladen wird. Der erfindungsgemäße Kraftfahrzeug-Leistungsprüfstand eignet sich deshalb auch für den mobilen Einsatz, mit dem neben der Leistungsmessung auch eine Abgasmessung bei vorgegebener Motorleistung durchführbar ist.

Weitere Einzelheiten und vorteilhafte Weiterbildungen des erfindungsgemäßen Kraftfahrzeug-Leistungsprüfstands ergeben sich aus weiteren abhängigen Ansprüchen in Verbindung mit der folgenden Beschreibung.

Zeichnung

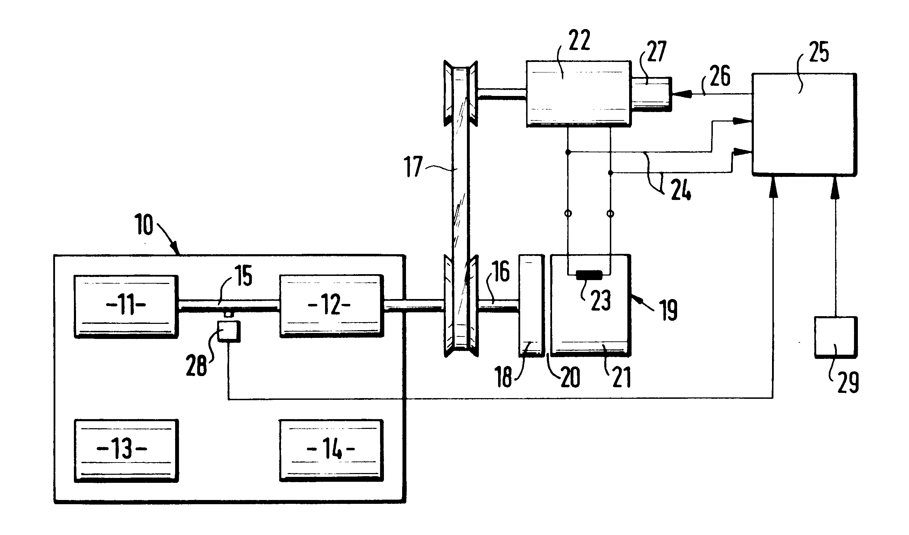

Die einzige Figur zeigt einen erfindungsgemäßen Kraftfahrzeug-Leistungsprüfstand.

Beschreibung des Ausführungsbeispiels

Die Figur zeigt ein Rollenteil 10, das vier Rollen 11 bis 14 zur Aufnahme der Antriebsräder eines zu prüfenden Kraftfahrzeugs enthält. Das Kraftfahrzeug sowie die Antriebsräder sind in der Figur nicht eingezeichnet. Zwei Rollen 13, 14 sind als Stützrollen ausgebildet. Zwei weitere Rollen 11, 12 sind als Lastrollen ausgebildet, die mit einer Welle 15 verbunden sind. Die Lastrollen 11, 12 sind über eine weitere Welle 16 mit einer Antriebsvorrichtung 17 sowie mit einem beweglichen Teil 18 einer Wirbelstrombremse 19 verbunden. Das bewegliche Teil 18 ist durch einen Luftspalt 20 von einem festen Teil 21 der Wirbelstrombremse 19 getrennt.

Die Antriebsvorrichtung 17 ist beispielsweise als Keilriemenantrieb einer Lichtmaschine 22 ausgebildet. Die von der Lichtmaschine 22 erzeugte elektrische Energie wird zur Erregung der im festen Teil 21 der Wirbelstrombremse 19 angeordneten Magnetspule 23 verwendet. Die elektrische Spannung an der Magnetspule 23 ist bei der Verwendung von Gleichstrom sowie bei bekannter Temperatur der Magnetspule 23 ein Maß für die Erregerleistung der Wirbelstrombremse und damit ein Maß für die Bremsleistung. Zur Messung der Spannung sind Leitungen 24 vorgesehen, die zu einem Zentralgerät 25 führen. Die gesamte Steuerung, die Meßwertaufbereitung und -verarbeitung sowie die Anzeige der Meßergebnisse wird vom Zentralgerät 25 vorgenommen. Auch die erforderliche Erregerleistung für die Lichtmaschine 22, die für die Erzeugung einer vorgegebenen elektrischen Leistung erforderlich ist, wird vom Zentralgerät 25 über eine Leitung 26 an einen Lichtmaschinenregler 27 gegeben.

Als weitere Eingangssignale des Zentralgeräts 25 sind das von einem Fühler 28 von der Welle 15 abgenommene Drehzahlsignal sowie die Signale einer Bedienvorrichtung 29 vorgesehen.

Der erfindungsgemäße Kraftfahrzeug-Leistungsprüfstand arbeitet folgendermaßen:

Die Antriebsräder des zu prüfenden Fahrzeugs werden auf die Rollen 11 und 12 gebracht. Nach Vorgabe der Bremskraft und der Fahrgeschwindigkeit an der Bedienvorrichtung 29 wird der Motor gestartet. Bei vorgegebener Bremskraft ist eine Beschleunigungsmessung möglich. Auf eine vorgegebene Geschwindigkeit wird durch Ändern der von der Wirbelstrombremse 19 erzeugten Bremskraft geregelt. In Abhängigkeit von der vom Fühler 28 aufgenommenen Drehzahl steuert das Zentralgerät 25 die Erregung der Lichtmaschine 22 über die Leitung 26 sowie über den Lichtmaschinenregler 27 derart, daß an der Magnetspule 23 im festen Teil 21 der Wirbelstrombremse 19 die Leistung derart geregelt wird, daß das bewegliche Teil 18 der Wirbelstrombremse, und somit der Antriebsmotor, auf einer bestimmten Drehzahl bzw. bestimmten Geschwindigkeit gehalten wird. Die Leistung in der Magnetspule 23 ist beispielsweise durch Spannungsmessung über die Leitungen 24 oder durch Strommessung möglich. Die Leitungen 24 sind nicht erforderlich, wenn eine eindeutige Beziehung zwischen der Erregung der Lichtmaschine 22 über die Leitung 26 sowie über den Lichtmaschinenregler 27 und der von der Lichtmaschine 22 abgegebenen Leistung vorliegt. Die Leitungen 24 sind in diesem Fall zur Überwachung der von der Lichtmaschine 22 erzeugten Leistung verwendbar.

Die Lichtmaschine 22 muß derart angetrieben sein, daß sie bei der kleinsten Prüfgeschwindigkeit bzw. bei der kleinsten vorkommenden Drehzahl genügend elektrische Leistung zum Erregen der Wirbelstrombremse 19 bereitstellen kann. Es kann deshalb erforderlich sein, die Drehzahl der Lichtmaschine gegenüber der Drehzahl der Lastrollen 11, 12 und der Wellen 15, 16 zu erhöhen. Die Antriebsvorrichtung 17 ist deshalb beispielsweise als Keilriemenantrieb mit einem vorgegebenen Übersetzungsverhältnis realisiert.

Die Erregerleistung in der Magnetspule 23 der Wirbelstrombremse 19 nimmt Spitzenwerte bis 3 kW zum Bremsen von Antriebsleistungen des Fahrzeugmotors bis beispielsweise 150 kW auf. Die Lichtmaschine 23 muß deshalb für diese Spitzenleistung von beispielsweise 3 kW ausgelegt sein. Aus Wirtschaftlichkeitsgründen kann es daher sinnvoll sein, anstelle einer Lichtmaschine 22 mehrere parallel betriebene kleinere Lichtmaschinen 22 vorzusehen. Wegen der hohen Produktionszahlen von Lichtmaschinen kleinerer Leistung können mehrere kleine Lichtmaschinen preisgünstiger sein als eine Lichtmaschine mit höherer Leistung.

Der elektrische Energiebedarf des Zentralgeräts 25, das Steuereinrichtungen, Signalerfassungs- und -verarbeitsvorrichtungen sowie wenigstens eine Anzeige enthält, und der Energiebedarf zur Erregung der Lichtmaschine 22 ist vergleichsweise gering, so daß an einen Netzanschluß keine besonderen Anforderungen gestellt werden. Die vom Netz zu beziehende Leistung beträgt nur wenige Watt. Der überwiegende Teil der zum Betätigen der Wirbelstrombremse 19 erforderlichen Energie wird durch den Antriebsmotor des zu prüfenden Fahrzeugs selbst aufgebracht. Die energieabgebende Lichtmaschine 22 stellt somit eine zusätzliche Bremslast für den Antriebsmotor dar. Aufgenommene mechanische Leistung sowie abgegebene elektrische Leistung in Abhängigkeit von der Erregung der Lichtmaschine 22 über den Regler 27 sind aus Herstellerangeben bekannt und können im Zentralgerät 25 bei der Ermittlung der gesamten Bremsleistung berücksichtigt werden. Die Lichtmaschine kann auch derart in den Meßvorgang einbezogen werden, daß ihr Reaktionsmoment ebenfalls auf die Meßeinrichtung wirkt. Der geringe externe Energiebedarf des erfindungsgemäßen Kraftfahrzeug-Leistungsprüfstands gestattet auch einen völlig netzunabhängigen Betrieb, wenn eine Batterie mit geringer Kapazität vorgesehen ist. Die Batterie ist über die Lichtmaschine 22 nachladbar. In der netzunabhängigen Ausführungsform eignet der Prüfstand für den mobilen Einsatz. Ein weiterer Vorteil dar netzunabhängigen Ausführungsform des erfindungsgemäßen Prüfstandes ist dessen Verwendung in Ländern, in denen eine passende Netzanschlußmöglichkeit nicht selbstverständlich ist.

**Patentansprüche**

1. Kraftfahrzeug-Prüfstand, insbesondere Kraftfahrzeug-Leistungsprüfstand, mit wenigstens einer Lastrolle, die mit einer Wirbelstrombremse koppelbar ist, dadurch gekennzeichnet, daß zur Bereitstellung von für die Wirbelstrombremse (19) erforderlicher Energie wenigstens eine mittels des Motors des zu prüfenden Kraftfahrzeugs antreibbare Lichtmaschine (22) vorgesehen ist.

2. Prüfstand nach Anspruch 1, dadurch gekennzeichnet, daß die Lichtmaschine (22) mit wenigstens einer Lastrolle (11, 12) gekoppelt ist.

3. Prüfstand nach Anspruch 1 oder 2, dadurch gekennzeichnet, daß zwischen der Lastrolle (11, 12) und der Lichtmaschine (22) eine Antriebsvorrichtung (17) vorgesehen ist.

4. Prüfstand nach Anspruch 3, dadurch gekennzeichnet, daß die Antriebsvorrichtung (17) als Keilriemenantrieb ausgebildet ist.

5. Prüfstand nach einem der vorhergehenden Ansprüche, dadurch gekennzeichnet, daß die elektrische Energieversorgung des Prüfstands durch eine Batterie erfolgt.

6. Prüfstand nach Anspruch 5, dadurch gekennzeichnet, daß zur Ladung der Batterie die Lichtmaschine (22) vorgesehen ist.

**Claims**

1. Test stand for motor vehicles, in particular performance test stand for motor vehicles, having at least one load roller which can be coupled to an eddy-current brake, characterised in that at least one generator (22) that can be driven by means of the engine of the vehicle to be tested is provided for the provision of energy necessary for the eddy-current brake (19).

2. Test stand according to Claim 1, characterized in that the generator (22) is coupled to at least one load roller (11, 12).

3. Test stand according to Claim 1 or 2, characterised in that a drive device (17) is provided between the load roller (11, 12) and the generator (22).

4. Test stand according to Claim 3, characterized in that the drive device (17) is constructed as a V-belt drive.

5. Test stand according to one of the preceding claims, characterized in that the electrical energy supply of the test stand is performed via a battery.

6. Test stand according to Claim 5, characterized in that the generator (22) is provided for charging the battery.

**Revendications**

1. Banc d'essai de véhicule à moteur, en particulier banc d'essai de puissance de véhicule à moteur, avec au moins un rouleau de charge, qui peut être accouplé à un frein à courants de Foucault, banc d'essai caractérisé en ce que pour la fourniture de l'énergie nécessaire pour le frein à courants de Foucault (19) il est prévu au moins une génératrice (22) pouvant être entraînée au moyen du moteur du véhicule à moteur à tester.

2. Banc d'essai selon la revendication 1, caractérisé en ce que la génératrice (22) est accouplée à au moins un rouleau de charge (11, 12).

3. Banc d'essai selon la revendication 1 ou 2, caractérisé en ce qu'entre le rouleau de charge (11, 12) et la génératrice (22) il est prévu un dispositif d'entraînement (17).

4. Banc d'essai selon la revendication 3, caractérisé en ce que le dispositif d'entraînement (17) est conçu comme un entraînement à courroie trapézoïdale.

5. Banc d'essai selon l'une des revendications précédentes, caractérisé en ce que l'alimentation en énergie électrique du banc d'essai est assurée par une batterie.

6. Banc d'essai selon la revendication 5, caractérisé en ce qu'il est prévu la génératrice (22) par la charge de la batterie.